Europäisches Patentamt

European Patent Office

Office européen des brevets

(11) Publication number: **0 122 243**
**B1**

(12) **EUROPEAN PATENT SPECIFICATION**

(45) Date of publication of patent specification: **15.11.89**

(51) Int. Cl.⁴: **H 01 Q 17/00,** B 32 B 15/14

(21) Application number: **84850093.0**

(22) Date of filing: **22.03.84**

(54) A method for manufacturing a radar camouflage material.

(30) Priority: **07.04.83 SE 8301908**

(43) Date of publication of application:
**17.10.84 Bulletin 84/42**

(45) Publication of the grant of the patent:
**15.11.89 Bulletin 89/46**

(84) Designated Contracting States:
**AT DE NL**

(56) References cited:
**AU-A- 496 649**
**US-A-3 300 781**
**US-A-3 349 397**
**US-A-3 733 606**

(73) Proprietor: **DIAB-BARRACUDA AB**
**S-59400 Gamleby (SE)**

(72) Inventor: **Karlsson, Lars**
**Nejlikevägen 10**
**S-59400 Gamleby (SE)**

(74) Representative: **Grennberg, Erik Bertil et al**
**H. ALBIHNS PATENTBYRA AB P.O. Box 3137**
**S-103 62 Stockholm (SE)**

Courier Press, Leamington Spa, England.

## Description

The invention relates to a method as recited in the preamble of claim 1.

A knitted camouflage material is known from AU—A—496 649, which otherwise is similar to a material obtained by the method as recited. Metals have also been used in forms other than fibres, and in US—A—3,300,781, metal-coated plastic layers are used, which are broken up by crumpling or crinkling.

One problem experienced with these known constructions is that they cannot be made to function satisfactorily within a number of radar wavelength ranges. The most common wavelength ranges used for detection by radar are the X-band, the 35GHz-band and the 94GHz-band.

The radar reflection obtained must be of the right magnitude, since it needs to provide a radar picture which coincides with the surroundings. In the known method in which metal fibrils are woven into the fabric, a certain percentage of the fibrils must be woven relatively spatially, since otherwise the reflection might be too high; and the threads must not lie too close together. A suitable thread density is 7 threads per cm. At high frequencies however (94GHz), problems arise in the form of excessive transmission through the meshes.

If metal foil is used instead, the reflection quickly becomes too high, while when the metal is vaporized onto a plastics film, e.g. polyester, a perfect mirror for radio waves is obtained. This layer however is highly sensitive to cracks occurring when the fabric is flexed or folded; a fact which can also be gathered from the aforementioned U.S. Patent Specification No. 3,300,781. The risk of cracks occurring is also high in the case of laminated structures. Reflection of the longer radar wavelengths is impaired in such cases.

An object of the present invention is to provide an improved radar camouflage material which will function satisfactorily over a wide range of wavelengths for radar waves .

This object is achieved in accordance with the invention with a method of the aforesaid kind, which includes the combination that the fabric is woven and in that between the plastics layer and the fabric there is a thin metal layer which is crinkled during lamination of the plastics layer onto said fabric.

The electrically conductive fibres suitably have a length greater than 3 cm.

Conveniently, the plastics material used in said plastics layer is such as to produce low emission factors within wavelength ranges of 3—5 and 8—14 µm. One such plastics material is polyethylene.

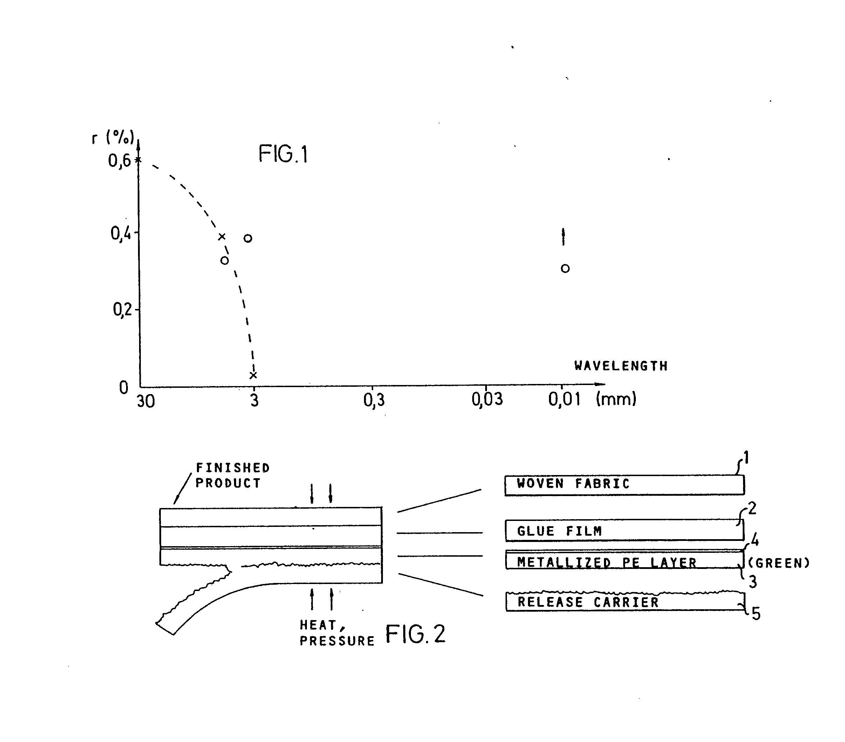

The invention will now be described in more detail with reference to an embodiment thereof illustrated in the accompanying drawing, in which Fig. 1 illustrates the reflection as a function of the wavelength in mutually different kinds of reflective materials; and Fig. 2 illustrates an embodiment of the invention.

In Fig. 1, the broken-line curve illustrates the wavelength dependency of the reflection for a fabric incorporating metal fibres which thus falls from 60 % reflection at a wavelength of 30 mm to 2.5 % reflection at 3 mm.

Corresponding values for a combined camouflage structure according to the invention have been shown by rings, from which it will be seen that at 3 mm the reflection ability of the structure has increased to 40%.

The reflection ability at a wavelength of 0.01 mm is 30%. If the metallic surface had been on the outside, a substantiallyhigher value would have been attained, but in the illustrated case the polymer in the foil acts to suppress the reflection ability of the structure to a suitable value.

## Exemplary Embodiment

A polyamide woven fabric 1 having 13/13 threads per cm was used as a carrier, in which each alternate thread was a solid drawn multifilament, while each other thread is spun and contains a few percent of metal fibrils which prior to being spun are finer than 20 µm in diameter and longer than 3 cm in length. The spun threads are needed in order to incorporate the metal fibre, while the solid drawn threads improve the tensile and tear strength of the fabric.

The fabric 1 is initially coloured green, to impart camouflaging properties thereto. The fabric is laminated to a vacuum-metallized polyethylene foil 3 with an intermediate glue layer 2, while applying heat, as illustrated in Fig. 2. A matted release carrier 5 is included in the laminate, to furnish the polyethylene foil with a matte surface.

The heat and pressure to which the fabric is subjected also causes it to sink partially into the metallized surface 4 and impair its electroconductive properties. The surface 4 of the metal also crinkles as the polyethylene 3 melts partially during the laminating process.

The previously described result was achieved with this foil.

## Claims

1. Method for manufacturing a radar camouflage material comprising a fabric and a plastics layer laminated thereon, the fabric incorporating *inter alia* electrically conductive fibres which are finer than 20 µm, characterized in that the fabric is woven and in that between the plastics layer and the fabric there is a thin metallic layer which is crinkled during lamination of the plastics layer onto said fabric.

2. A method as claimed in Claim 1, characterized in that the fibres have a length greater than 3 cm.

3. A method as claimed in Claim 1 or 2, characterized in that the plastics layer is polyethylene; and that said layer is bonded to the fabric by means of a glue film.

**Patentansprüche**

1. Verfahren zur Herstellung eines Radartarnungsmaterials, das einen Stoff und eine auf diesen laminierte Kunststofflage aufweist, wobei der Stoff *unter anderem* elektrisch leitende Fasern enthält, die feiner als 20 μm sind, dadurch gekennzeichnet, daß der Stoff gewebt ist und daß zwischen der Kunststofflage und dem Stoff eine dünne metallische Lage vorhanden ist, die während des Laminierens der Kunststofflage auf den Stoff wellig wird.

2. Verfahren nach Anspruch 1, dadurch gekennzeichnet, daß die Fasern eine Länge von mehr als 3 cm haben.

3. Verfahren nach Anspruch 1 oder 2, dadurch gekennzeichnet, daß die Kunststofflage aus Polyäthylen besteht; und daß diese Lage mittels eines Klebstoffilms an den Stoff gebunden ist.

**Revendications**

1. Procédé de fabrication d'un matériau de camouflage contre les radars comprenant un tissu et une couche de matière plastique formée par stratification sur celui-ci, le tissu renfermant entre autres des fibres électriquement conductrices qui ont une finesse inférieure à 20μm, caractérisé en ce que le tissu est réalisé par tissage et en ce que, entre la couche de matière plastique et le tissu, se trouve une mince couche métallique qui est plissée au cours du dépôt par stratification de la couche de matière plastique sur ledit tissu.

2. Procédé selon la revendication 1, caractérisé en ce que les fibres ont une longueur supérieure à 3 cm.

3. Procédé selon la revendication 1 ou 2, caractérisé en ce que la couche de matière plastique est en polyéthylène; et en ce que ladite couche est liée au tissu au moyen d'un film de colle.

## FIG.1

r (%) vs WAVELENGTH (mm)

0,6
0,4
0,2
0

30 ... 3 ... 0,3 ... 0,03 ... 0,01 (mm)

## FIG.2

WOVEN FABRIC — 1

GLUE FILM — 2

METALLIZED PE LAYER (GREEN) — 4

RELEASE CARRIER — 3

— 5

FINISHED PRODUCT

HEAT, PRESSURE

1